# EUROPEAN PATENT APPLICATION

(11) **EP 3 187 990 A1**
(43) Date of publication of application: **05.07.2017**
(21) Application number: 15753298.7
(22) Date of filing: 08.01.2015
(51) Int. Cl.: G06F 3/048

(54) **DISPLAY METHOD AND MOBILE TERMINAL**

(30) Priority: 29.08.2014 CN 201410438797
(71) Applicant: Huizhou TCL Mobile Communication Co., Ltd., Huizhou, Guangdong 516006 (CN)
(72) Inventor: SHI, Tian, Huizhou Guangdong 516006 (CN)
(74) Representative: Isarpatent
(86) International application number: PCT/CN2015/070366
(87) International publication number: WO 2016/029626

(57) **Abstract**

The present invention provides a displaying method and mobile terminal, wherein the method comprises: detecting a grip data through a sensor by a mobile terminal; determining a grip posture according to the grip data, wherein the grip posture including a left-hand grip or a right-hand grip; adjusting a display of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip. The above scheme can realize adjusting the display style to the style for the convenience of the current grip posture operation according to the posture of the user currently gripping the mobile terminal with a large screen size, and increase the user's experience.

## Description

### BACKGROUND OF THE INVENTION

### 1. Field of the Invention

The present invention relates to a mobile communication terminal, and particularly to a displaying method and mobile terminal.

### 2. Description of the Related Art

Usually, options like a menu relating to applications in a mobile terminal are located in a fixed region. When an image is displayed through a horizontal screen manner or a vertical screen manner on a display screen, the options such as the menus are still located in the specifically fixed region, and the position is not adjusted with the rotation of the display screen.

However, in a mobile terminal with a larger screen size, when the user grips the mobile terminal with a single hand, it is difficult to manipulate the options such as the menu relating to applications with the hand gripping the mobile terminal, which is inconvenient for the user.

### SUMMARY OF THE INVENTION

The present invention mainly solves the technical problem of providing a displaying method and a mobile terminal, which adjusts the display style according to the grip posture of the user, for the convenience of the user's operation.

To solve the aforementioned technical problem, the present invention applies a technical method, wherein the method comprises the following steps: detecting a grip data through a sensor by a mobile terminal; acquiring a contour formed by a region of the grip data sensed by the sensor; comparing the contour with a predefined grip posture, and determining whether a current grip posture is a single-hand grip or a both-hands grip; determining that the grip posture is a left-hand grip or a right-hand grip if the grip posture is the single-hand grip, otherwise, no processing; locating an operation menu of the mobile terminal to a region convenient for a thumb manipulation under the grip posture, wherein, if the grip posture is the left-hand grip, then locating the operation menu of the mobile terminal to a region convenient for a left-thumb manipulation; if the grip posture is the right-hand grip, then locating the operation menu of the mobile terminal to a region convenient for a right-thumb manipulation.

The sensors are sequentially disposed on an edge of a housing of the mobile terminal, the sensor is a pressure sensor or a heat sensor.

Before the step of detecting the grip data through the sensor by the mobile terminal further comprises: determining whether to enable a page auto-adjusting function; if the auto-adjusting function is enabled, then monitoring an event subscription device and performing steps of detecting the grip data through the sensor by the mobile terminal. The subscription device is used for subscribing the monitored event of a grip state, when it is monitor that the grip posture is the left-hand grip or the right-hand grip, sending a notification message to a subscriber, to control the subscriber to adjust a display of the subscriber to a style corresponding to the grip posture, the subscriber is a user end of the mobile terminal.

To solve the technical problem aforementioned, the present invention applies another technical method: providing a displaying method, wherein the method comprises: detecting a grip data through a sensor by a mobile terminal; determining a grip posture according to the grip data, wherein the grip posture includes a left-hand grip or a right-hand grip; adjusting a display of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip.

The step of determining the grip posture according to the grip data particularly comprises: acquiring a contour formed by a region of the grip data sensed by the sensor; comparing the contour with a predefined grip posture, and determining whether a current grip posture is a single-hand grip or a both-hands grip; if the grip posture is the single-hand grip, determining that the grip posture is a left-hand grip or a right-hand grip if the grip posture is the single-hand grip, otherwise, no processing.

The step of adjusting the display of the mobile terminal to the corresponding style of the grip posture particularly comprises: locating an operation menu of the mobile terminal to a region convenient for a thumb manipulation under the grip posture, wherein, if the grip posture is the left-hand grip, then locating the operation menu of the mobile terminal to a region convenient for a left-thumb manipulation; if the grip posture is the right-hand grip, then locating the operation menu of the mobile terminal to a region convenient for a right-thumb manipulation.

The sensors are sequentially disposed on an edge of a housing of the mobile terminal, the sensor is a pressure sensor or a heat sensor.

Before the step of detecting the grip data through the sensor by the mobile terminal further comprises: determining whether to enable a page auto-adjusting function; if the auto-adjusting function is enabled, then monitoring an event subscription device and performing steps of detecting the grip data through the sensor by the mobile terminal, wherein the subscription device is used for subscribing the monitored event of a grip state, when it is monitored that the grip posture is the left-hand grip or the right-hand grip, sending a notification message to a subscriber, to control the subscriber to adjust a display of the subscriber to a style corresponding to the grip posture; the subscriber is a user end of the mobile terminal.

To solve the technical problem aforementioned, the present invention applies yet another technical method: providing a mobile terminal, wherein the terminal comprises: a detecting module for detecting a grip data through a sensor; a determining module for determining a grip posture according to the grip data, wherein the grip posture includes a left-hand grip or a right-hand grip; an adjusting module for adjusting a display of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip.

The determining module comprises: an acquiring unit for acquiring a contour formed by a region of the grip data sensed by the sensor; a first determining unit for comparing the contour with a predefined grip posture, and determining whether a current grip posture is a single-hand grip or a both-hands grip; a second determining unit for determining whether the grip posture is a left-hand grip or a right-hand grip, when the grip posture is determined to be the single-hand grip.

The adjusting module is particularly used for locating an operation menu of the mobile terminal to a region convenient for a thumb manipulation under the grip posture, wherein, if the grip posture is the left-hand grip, then locating the operation menu of the mobile terminal to a region convenient for a left-thumb manipulation; if the grip posture is the right-hand grip, then locating the operation menu of the mobile terminal to a region convenient for a right-thumb manipulation.

The sensors are sequentially disposed on an edge of a housing of the mobile terminal, the sensor is a pressure sensor or a heat sensor.

The terminal further comprises: a subscription management module; a setting module for saving a setting message inputted by the user, when the setting module receives the setting message of enabling a page auto-adjusting function inputted from the user, notifying the subscription management module of monitoring an event subscription device, and notifying the detecting module of detecting the grip data. The subscription device is used for subscribing the monitored event of a grip state, when the grip posture monitored is the left-hand grip or the right-hand grip, sending a notification message to a subscriber, to control the subscriber to adjust a display of the subscriber to a style corresponding to the grip posture; the subscriber is a user end of the mobile terminal.

The advantage of the present invention is: unlike the prior art, the present invention detects a grip data of a user through a sensor, and determines a grip posture according to the grip data, when the grip posture determined to be a left-hand grip or a right-hand grip by the mobile terminal, a display of the mobile terminal is adjusted to a style corresponding to the grip posture, for the convenience of a manipulation of the current grip posture of the user. The present invention can realize adjusting the display style to the style for the convenience of the current grip posture operation according to the posture of the user currently gripping the mobile terminal with a large screen size, and improve the user's experience.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 illustrates a flowchart of the displaying method according to an embodiment of the present invention;
FIG. 2 illustrates a diagram of the mobile terminal with a predetermined display style of the system according to an embodiment of the present invention;
FIG. 3 illustrates a diagram of adjusting the display style according to an embodiment of the present invention;
FIG. 4 illustrates a flowchart of the displaying method according to another embodiment of the present invention;
FIG. 5 illustrates a flowchart of the displaying method according to another embodiment of the present invention;
FIG. 6 illustrates a diagram of the structure of the mobile terminal according to an embodiment of the present invention; and
FIG. 7 illustrates a diagram of the structure of the mobile terminal according to another embodiment of the present invention.

### DESCRIPTION OF THE EMBODIMENTS

Hereinafter, some embodiments of the present invention will be described with reference to the accompanying drawings. In the description of the elements of the present invention, the terms "first", "second", "A", "B", "(a)", "(b)", and the like may be used. These terms are merely used to distinguish one structural element from other structural elements, and a property, an order, a sequence, and the like of a corresponding structural element are not limited by the term. It should be noted that if it is described in the specification that one component is "connected", "coupled", or "joined" to another component, a third component may be "connected", "coupled", and "joined" between the first and second components, although the first component may be directly connected, coupled, or joined to the second component.

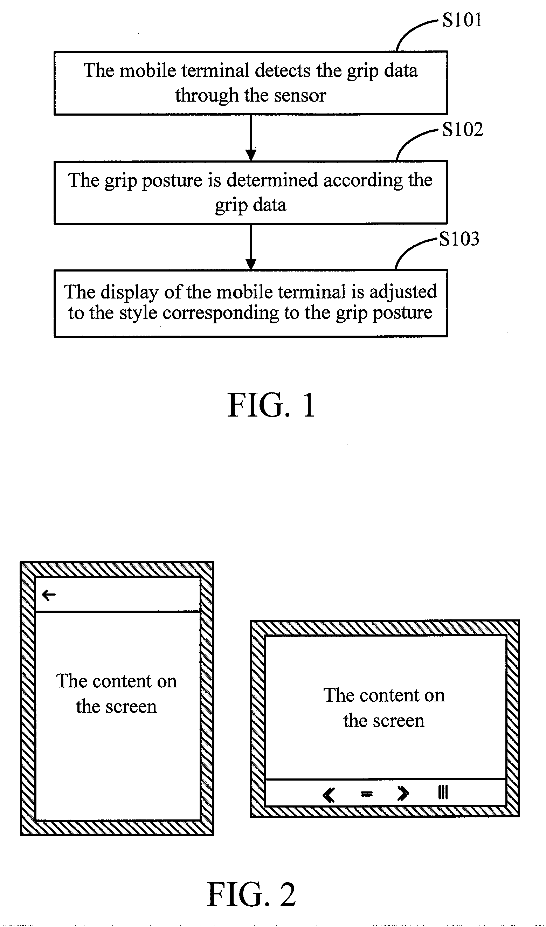

Refer to FIG. 1, which illustrates a flowchart of the displaying method according to an embodiment of the present invention. The displaying method of the present invention includes the following steps:
S101: The mobile terminal detects the grip data through the sensor.

Please refer to FIG. 2 together, which illustrates a diagram of the mobile terminal with a predetermined display style of the system according to an embodiment of the present invention.

When the user grips a mobile terminal which has a larger screen size, and performs operations like browsing webpages or playing videos through the user end installed in the mobile terminal, the mobile terminal displays the buttons manipulated by the user according to the predetermined display style of the system displays the buttons manipulated by the user. For example, as shown in FIG. 2, when the mobile terminal is in vertical screen mode, the return button is displayed at the upper left corner of the content on the screen, displayed at the upper left corner of the content on the screen, for the user to manipulate; when the mobile terminal is in the horizontal screen mode, the volume adjustment button and the play/pause button are displayed directly below the content of the screen, for the user to manipulate. This is only an example, the predetermined display style of the system is not limited to this.

The mobile terminal detects the grip data of the region contacted with the user through the sensor, wherein the sensor can be a pressure sensor, or a heat sensor, or the combination of a pressure sensor and a heat sensor, but it is not limited to this, the sensor can be other sensors. The sensor is disposed on the borders around the mobile terminal, the number of sensors on each border can be one or more than one, and is not limited. When the number of the sensors is one, the sensor covers the border of the mobile terminal, when the number of the sensor is more than one, the sensors are sequentially disposed on and covering the borders of the mobile terminal.

It can be seen that the sensor can be disposed to detect the grip data immediately, or disposed to detect the grip data at a predetermined time interval, the predetermined time interval can be disposed according to specific requirements. The grip data can be a single grip data, or an average value of the grip data within a certain time.

S102: The grip posture is determined according the grip data, wherein the grip posture includes a left-hand grip or a right-hand grip.

The mobile terminal compares the grip data detected with the pre-stored grip data to determine the current grip posture of the user. The grip posture includes a left-hand grip, a right-hand grip, or a both-hands grip.

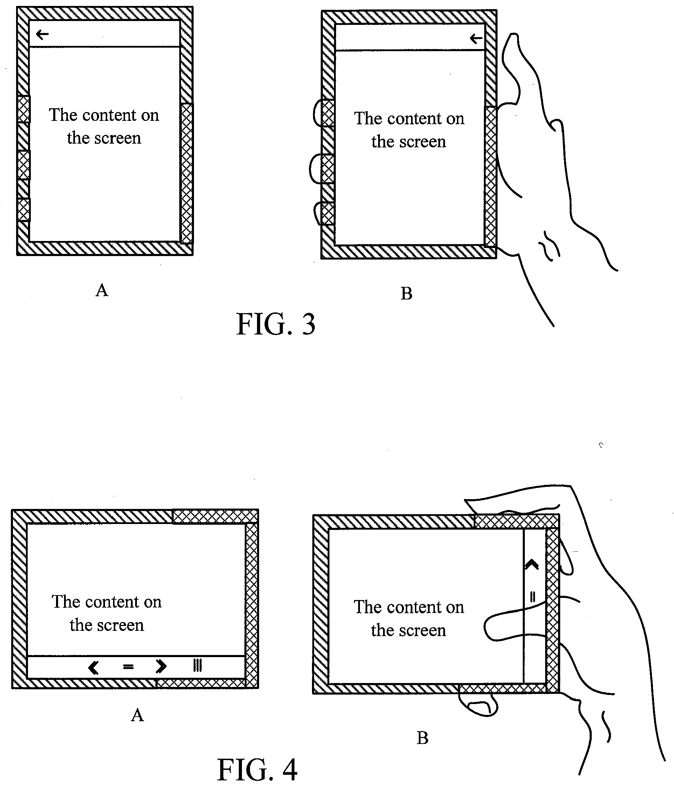

Please refer to FIG. 3 to FIG. 4. FIG. 3 illustrates a diagram of adjusting the display style according to an embodiment of the present invention. FIG. 3A illustrates a diagram of the grip data detected according to an embodiment of the present invention. FIG. 3B illustrates a diagram of determining the grip posture according to the grip data detected then adjusting the display style according to an embodiment of the present invention. FIG. 4A illustrates a diagram of the grip data detected according to another embodiment of the present invention. FIG. 4B illustrates a diagram of determining the grip posture according to the grip data detected then adjusting the display style according to another embodiment of the present invention.

For example, when the mobile terminal compares the grip data detected with the pre-stored grip data, if the grip data detected by the mobile terminal is the grip data shown as the part of the dark shadow in FIG. 3A or FIG. 4A (but not limited thereto), the mobile terminal determines the current grip posture of the user to be a right-hand grip. The detected grip data can equal to the pre-stored grip data, and the values can be proportional. Surely, a threshold of inaccuracy can also be set; when the difference between the detected grip data and the pre-stored grip data does not exceed the threshold of inaccuracy, the mobile terminal determines that the detected grip data equals the pre-stored grip data, otherwise it determines that the detected grip data does not equal to the pre-stored grip data.

The grip data can be an original data or a characteristic data after being processed. As shown in FIG. 3B, when the right hand is used to grip, the fingers of the right-hand contacts the left side of the mobile terminal. Generally, the number of the fingers is 2, 3, or 4. As to the contact region (contour), the contour between the fingers may be discrete; with regard to the pressure, the pressure of the fingers sensed by the sensor is also discrete. And the hollow of palm or the region of the right hand contacts the right side of the mobile terminal, the contacted region generally is a sequentially big area. Based on the situation mentioned above, the grip data of the right-hand grip can be ascertained; similarly, the grip data of the left-hand grip can also be ascertained.

Furthermore, as to FIG. 4B, when the right hand is used to grip, the fingers of the right-hand contact the right sides of the upper, bottom border of the mobile terminal, the hollow of palm or the region of the right hand contacts the right side of the mobile terminal. Generally, the fingers can contact the right sides of both the upper border and the bottom border, also can only contact the right side of the upper border, or the right side of the bottom border, the contact region (contour) of the right side of the upper border or the right side of the bottom border may be discrete, and also may be a sequentially big area, and the contact region (contour) of the right side of the mobile terminal contacted by the hollow of palm or the region of the right hand contact generally is a sequentially big area. Based on the situation mentioned above, the grip data of the right-hand grip can be ascertained; similarly, the grip data of the left-hand grip can also be ascertained.

It can be seen that the method of the mobile terminal for determining the left-hand grip or the both-hands grip is similar, there is no further description here.

S103: The display of the mobile terminal is adjusted to the style corresponding to the grip posture, wherein, if the grip posture is a left-hand grip, then the display of the mobile terminal is adjusted to the style convenient for the left-hand grip manipulation; if the grip posture is a right-hand grip, then the display of the mobile terminal is adjusted to the style convenient for the right-hand grip manipulation.

When the mobile terminal determines the current grip posture to be a left-hand grip or a right-hand grip, the current display style is adjusted to the display style corresponding to the grip posture of the current user, to make the adjusted display style convenient for the manipulation of the current grip posture. When the mobile terminal determines the current grip posture to be a left-hand grip, the display of the mobile terminal is adjusted to the style convenient for the left-hand grip manipulation, that is, the manipulation function menu of the main screen or all screen is moved to the screen region which can be contacted by the left-hand thumb to be displayed for the left-hand thumb manipulation; when the mobile terminal determines the current grip posture to be a right-hand grip, the display of the mobile terminal is adjusted to the style convenient for the right-hand grip manipulation, that is, the manipulation function menu of the main screen or all screen is moved to the screen region which can be contacted by the right-hand thumb to be displayed for the right-hand thumb manipulation.

When the mobile terminal determines the current grip posture to be a both-hands grip, the display style is not adjusted, and the current predetermined display style of the system is maintained.

The left-hand grip corresponds to the display style convenient for the left-hand manipulation, the right-hand grip corresponds to the display style convenient for the right-hand manipulation, the both-hands grip corresponds to predetermined display style of the system; surely the predetermined display style of the system includes the display styles corresponding to the horizontal screen and the vertical screen.

For example, as shown in FIG. 3B, when the mobile terminal is in the vertical screen mode, if the mobile terminal determines the current grip posture to be a right-hand grip, then the return button is displayed at the right side of the content of the screen, for the convenience of the right-hand manipulation of the user. Surely, the position of the return button is not limited to this, and only needs to be adjusted to be within the range of the right-hand manipulation of the user.

When the mobile terminal is in the horizontal screen mode, if the mobile terminal determines the current grip posture to be right-hand grip, then the volume adjustment button, and the play/pause button are displayed at the right side of the content of the screen, for the convenience of the right-hand manipulation of the user. Surely, the positions of the volume adjustment button, and the play/pause button are not limited to this, and only need to be adjusted to be within the range of the right-hand manipulation of the user.

It can be seen that, the method of the mobile terminal adjusting the display style according to the left-hand grip is similar, there is no further description here.

It can be seen that when the mobile terminal determines that the current grip posture to be changed, the current display style is adjusted to the style convenient for the changed grip posture manipulation. For example, when the mobile terminal determines that the grip posture of the user is changed from a left-hand grip to a both-hands grip, the current display style is adjusted to the predetermined display style of the system; when the mobile terminal determines that the grip posture of the user is changed from a left-hand grip to a right-hand grip, the current display style is adjusted to the style convenient for a right-hand grip manipulation.

In the aforementioned scheme, the mobile terminal detects the grip data of the user through the sensor, and determines the current grip posture of the user according to the grip data, when the mobile terminal determines the current grip posture to be a left-hand grip or a right-hand grip, the display of the mobile terminal is adjusted to the style corresponding to the grip posture, for the convenience of the current grip posture manipulation of the user. The present invention can realize adjusting the display style to the style convenient for the current grip posture manipulation according to the mobile terminal with a large screen size currently gripped by the user, improving the user's experience.

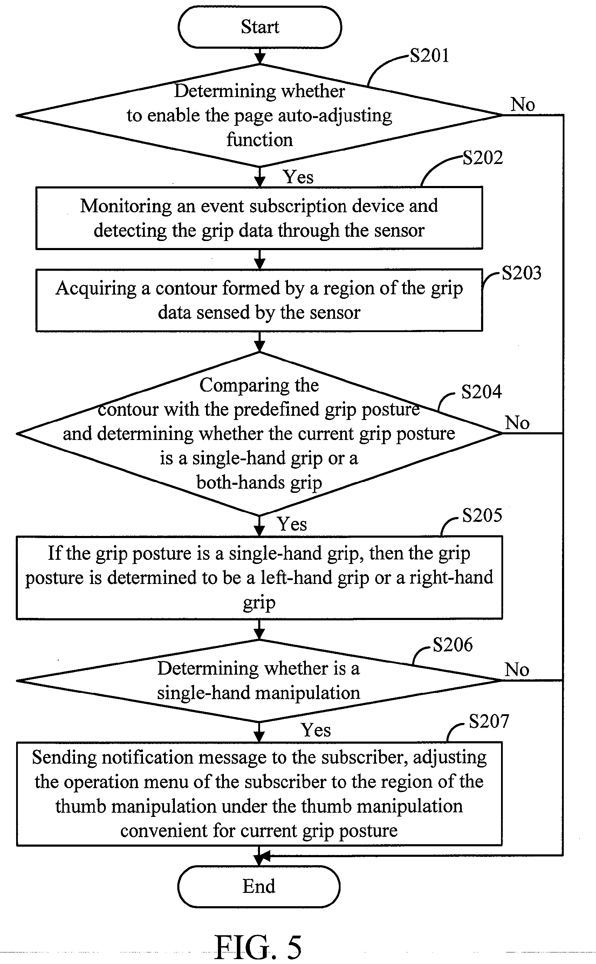

Refer to FIG. 5, which illustrates a flowchart of the displaying method according to another embodiment of the present invention. The displaying method of the present invention includes the following steps:
S201: Determining whether to enable the page auto-adjusting function.

Please also refer to FIG. 2, which illustrates a diagram of the mobile terminal with a predetermined display style of the system according to an embodiment of the present invention.

When the user grips the mobile terminal with a bigger screen size, performs operations like browsing webpages or playing videos through the user end installed on the mobile terminal, the mobile terminal detects whether the command of enabling the page auto-adjusting function sent by the user is received, thus determining whether the user has enabled the page auto-adjusting function.

When the mobile terminal determines that the user has not enabled the page auto-adjusting function, the buttons manipulated by the user are displayed according to the predetermined display style of the system displaying the buttons manipulated by the user. For example, when the mobile terminal is in the vertical screen mode, the return button is displayed at the upper left corner of the content on the screen for the user to manipulate; when the mobile terminal is in the horizontal screen mode, the volume adjustment button, and the play/pause button are displayed directly below the content of the screen for the user to manipulate. This is only an example, the predetermined display style of the system is not limited to this.

If the determined result is: the mobile terminal determines that the user has enabled the page auto-adjusting function, then the step S202 is performed.

If the determined result is: the mobile terminal determines that the user has not enabled the page auto-adjusting function, then the step S202 is not performed, that is, no process is performed, and the predetermined display style of the system is maintained.

S202: Monitoring an event subscription device and detecting the grip data through the sensor. The subscription device is used for subscribing the monitored event of a grip state, when the grip posture monitored is a left-hand grip or a right-hand grip, a notification message is sent to the subscriber, to control the subscriber to adjust a display of the subscriber to a style corresponding to the grip posture, the subscriber is the user end of the mobile terminal.

When the mobile terminal determines that the user has enabled the page auto-adjusting function, an event subscription device is monitored and the notification sensor starts to detect the grip data of the mobile terminal gripped by the user. The subscription device is used for subscribing to the monitored event of a grip state, when the grip posture monitored is the left-hand grip or the right-hand grip, sending a notification message to a subscriber, to control the subscriber to adjust a display of the subscriber to a style corresponding to the grip posture, the subscriber is a user end of the mobile terminal.

The mobile terminal detects the grip data of the region contacted with the user through the sensor. Wherein, the sensor can be a pressure sensor, or a heat sensor, or the combination of the pressure sensor and the heat sensor, but is not limited to this; it also can be other sensors. The sensors are sequentially disposed on the housing edge of the mobile terminal, that is, the sensors are disposed around the housing edge of the mobile terminal.

For example, when the sensor is a pressure sensor, the sensor gathers pressure values of itself, the grip here is the pressure value. When the sensor is a heat sensor, the sensor gathers heat values of itself, the grip here is the heat value.

It can be seen that the sensor can be set to immediately detect the grip data, or can be set to detect the grip data at each predetermined time interval. The predetermined time can be set with regards to specific requirements. The grip data can be a single grip data, or an average value of the grip data within a certain time.

S203: Acquiring a contour formed by a region of the grip data sensed by the sensor.

The mobile terminal compares the grip data sensed by the sensor with the pre-stored grip data, to determine whether the grip data currently sensed is valid data. When the grip data detected is valid data, acquires a contour formed by a region of the grip data sensed by the sensor.

The method of determining whether the currently sensed gripped data is valid data can be comparing the grip data and the value of predetermined interval, if the sensed grip data is within the range of the value of predetermined interval, then it is determined to be valid grip data, if the sensed grip data is not within the range of the value of predetermined interval, then it is determined to be invalid grip data. Wherein, the value of predetermined interval can be set according to practical requirements.

For example, when the sensor is a pressure sensor, the grip data is the value of the pressure. The mobile terminal compares the value of the pressure currently sensed by the sensor with the maximum value and minimum value of the predetermined interval, thereby determining whether the current grip data belongs to the predetermined interval. If the sensed value of the pressure is within the range of the value of predetermined interval, then it is determined to be valid grip data. If the sensed grip data is not within the range of the value of predetermined interval, then it is determined to be invalid grip data.

When the sensor is a heat sensor, the grip data is the heat value. The mobile terminal compares the value of the heat currently sensed by the sensor with the maximum value and minimum value of the predetermined interval, thereby determining whether the current grip data belongs to the predetermined interval. If the sensed value of heat is within the range of the value of predetermined interval, then determined to be valid grip data. If the sensed grip data is not within the range of the value of predetermined interval, then it is determined to be invalid grip data.

It can be seen that the method of determining whether the current grip data is valid grip data is not limited thereto. In methods of other embodiments, it can be determined through other methods, for example, comparing the current grip data with the original grip data, determining through the predetermined interval to which the determined difference of the current grip data and the pre-stored original grip data belongs.

When the mobile terminal determines the current grip data to be valid grip data, the contour formed by the region of the valid grip data sensed by the sensor is acquired.

Please refer to FIG. 3 to FIG. 4. FIG. 3 illustrates a diagram of adjusting the display style according to an embodiment of the present invention. FIG. 3A illustrates a diagram of the grip data detected according to an embodiment of the present invention. FIG. 3B illustrates a diagram of determining the grip posture according to the grip data detected then adjusting the display style according to an embodiment of the present invention. FIG. 4A illustrates a diagram of the grip data detected according to another embodiment of the present invention. FIG. 4B illustrates a diagram of determining the grip posture according to the grip data detected then adjusting the display style according to another embodiment of the present invention.

For example, when the mobile terminal determines the current grip data to be valid grip data, the contour formed by the region of the valid grip data sensed by the sensor is acquired, as the grip data shown as the dark shadow part in FIG. 3A or FIG. 4A (but not limited to this).

S204: Comparing the contour with the predefined grip posture and determining whether the current grip posture is a single-hand grip or a both-hands grip.

The mobile terminal compares the contour formed by the region of the valid grip data sensed by the sensor with the contour of the predefined grip posture, and determines whether the current grip posture is a single-hand grip or a both-hands grip. The contour of the predetermined grip posture is established in advance and stored in the mobile terminal. The contour of the predetermined grip posture includes the single-hand grip, the both-hands grip in the vertical screen mode, the single-hand grip, the both-hands grip in the horizontal screen mode; the single-hand grip in the vertical screen mode and the horizontal screen mode further includes a left-hand grip and a right-hand grip.

When the contour acquired by the mobile terminal is the contour shown by the dark shadow part in FIG. 3A or FIG. 4A (but not limited to this), the mobile terminal determines the current grip posture of the user to be a single-hand grip. The size of the acquired contour can equal to the size of the contour of the predetermined grip posture pre-stored, the sizes can also be proportional. Surely, a threshold value of inaccuracy can also be set. When the difference of the acquired contour and the pre-stored contour of the predefined grip posture does not exceed the threshold value, then the sizes are considered the same, and otherwise are not the same.

It can be seen that the method of the mobile terminal determining a left-hand grip or a both-hands grip is similar, there is no further description here.

If the mobile terminal determines the current grip posture to be a single-hand grip, then the step S205 is performed.

If the mobile terminal determines the current grip posture to be a both-hands grip, then the step S205 is not performed, that is, the display style is not adjusted style, the predetermined display style of the system is maintained.

Surely, it is not necessary to determine the grip posture through the contour formed by the region of the determined grip data, for example, the grip posture can be determined through the characteristic of the determined grip data. For example, the grip posture can be determined by means of the pressure on the two sides of the mobile terminal, i.e. the distribution of the pressure.

S205: If the grip posture is a single-hand grip, then the grip posture is determined to be a left-hand grip or a right-hand grip.

When the mobile terminal determines the current grip posture to be a single-hand grip, the mobile terminal then compares the acquired contour with the contour of the predefined a left-hand grip posture or a right-hand grip posture, thereby determining the current grip posture to be a left-hand grip or a right-hand grip.

For example, when the mobile terminal determines the contour shown by the dark shadow part in FIG. 3A or FIG. 4A (but not limited to this) to be a single-hand grip, the mobile terminal then compares the contour shown by the dark shadow part in FIG. 3A or FIG. 4A with the contour of the predefined left-hand grip posture or right-hand grip posture, to determine the current grip posture of the user to be a right-hand grip. The size of the acquired contour can be equal to the size of the contour of the predefined, pre-stored grip posture, the sizes can also be proportional.

It can be seen that the method of the mobile terminal determining a left-hand grip is similar, there is no further description here.

It can be seen that the aforementioned steps S204 and S205 can be combined to be one step to be processed.

S206: Determining whether is a single-hand manipulation.

There are many methods to determine whether is a single-hand manipulation. For example, the mobile terminal computes the statics of the distribution of the manipulated region on screen during a period of time. If the manipulated region on screen is fixed with the range if the activity of the left-hand thumb during the period of time, then the mobile terminal is considered to be manipulated with a single left-hand; similarly, if the manipulated region on screen is fixed within the range of the activity of the right-hand thumb during the period of time, then the mobile terminal is considered to be manipulated with a single right-hand. If the determined result is a single left-hand or a single right-hand manipulation, then proceed to step S207, otherwise do not proceed to step S207.

The single-hand manipulation can be determined through the characteristic of the frequently moving thumb in single-hand manipulation, for example, the pressure on the side of the mobile terminal contacted with the thumb changes with the activity of the thumb; however, correspondingly, the pressure on the other side of the mobile terminal contacted with the forefinger or middle finger basically does not change or changes a little. When the data sensed by the sensor of the mobile terminal matches the situation mentioned above, it is determined to be a single-hand manipulation.

It can be seen that, step S206 is optional.

S207: Adjusting an operation menu of the mobile terminal to a region convenient for a thumb manipulation under the grip posture, wherein, if the grip posture is the left-hand grip, then adjusting the operation menu of the mobile terminal to a region convenient for a left-thumb manipulation; if the grip posture is the right-hand grip, then adjusting the operation menu of the mobile terminal to a region convenient for a right-thumb manipulation.

When subscription device monitors in that the mobile terminal determines the current grip posture to be a left-hand grip or a right-hand grip, the subscription device sends notification message to the subscriber, then controls the subscriber to adjust the operation menu of the subscriber to the region of the thumb manipulation under the thumb manipulation convenient for current grip posture. The subscriber is installed at the user end in the mobile terminal, the number of subscribers can be one, or more than one, and the subscriber can be already enabled by the user or be used by the user, or not yet enabled by the user.

If the grip posture is a left-hand grip, then the operation menu currently used by the user at the user end is adjusted to the region convenient for left-hand thumb manipulation; if the grip posture is a right-hand grip, then the operation menu of the mobile terminal is adjusted to the region convenient for right-hand thumb manipulation.

For example, as shown in FIG. 3B, when the mobile terminal is in the vertical screen mode, if the subscription device monitors in that the mobile terminal determines the current grip posture to be a right-hand grip, then the subscription device controls the subscriber to display the return button on the right side of the content of the screen, for convenience of the right-hand thumb manipulation of the user. Surely, the location of the return button is not limited to this, and only needs to be adjusted to be within the range of the right-hand thumb manipulation of the user.

When the mobile terminal is in the horizontal screen mode, if the subscription device monitors in that the mobile terminal determines the current grip posture to be a right-hand grip, then the volume adjustment button and the play/pause button are displayed on the right side of the content of the screen, for convenience of the right-hand manipulation of the user. Surely, the locations of the volume adjustment button and the play/pause button are not limited to this, and only need to be adjusted to be within the range of the right-hand thumb manipulation of the user.

The adjusting method when the subscription device monitors in that the mobile terminal determines the current grip posture to be left-hand grip is similar, there is no more further here.

It can be seen that in other embodiments, when the step S206 is included, when the subscription device monitors in that the mobile terminal determines the current grip posture to be single left-hand or single right-hand, the subscription device controls the subscriber to adjust the operation menu of the subscriber to the region convenient for thumb manipulation under the current grip posture. The single left-hand manipulation indicates that when the user grips mobile terminal with the left hand, the mobile terminal is manipulated with the left hand; the single right-hand manipulation indicates that when the user grips mobile terminal with the right hand, the mobile terminal is manipulated with the right hand.

If grip posture is a left-hand single-hand grip, the operation menu of the user end used by the user is adjusted to the region convenient for left-hand thumb manipulation; if the grip posture is a single right-hand grip, then the operation menu of the mobile terminal is adjusted to the region convenient for right-hand thumb manipulation.

Specific adjust methods of the subscription device monitoring that the mobile terminal and determining the current grip posture to be a left-hand grip or a right-hand grip are the same, specifically, please refer to the description mentioned above.

In the aforementioned scheme, when the mobile terminal determines the current grip posture of the user to be a left-hand grip or a right-hand grip through the grip data detected by the sensor, the display of the mobile terminal is adjusted to the corresponding style of the grip posture, for convenience of the manipulation under the current grip posture of the user. The above scheme can realize adjusting the display style to the style for the convenience of the current grip posture operation according to the posture of the user currently gripping a mobile terminal with a large screen size, and increase the user's experience.

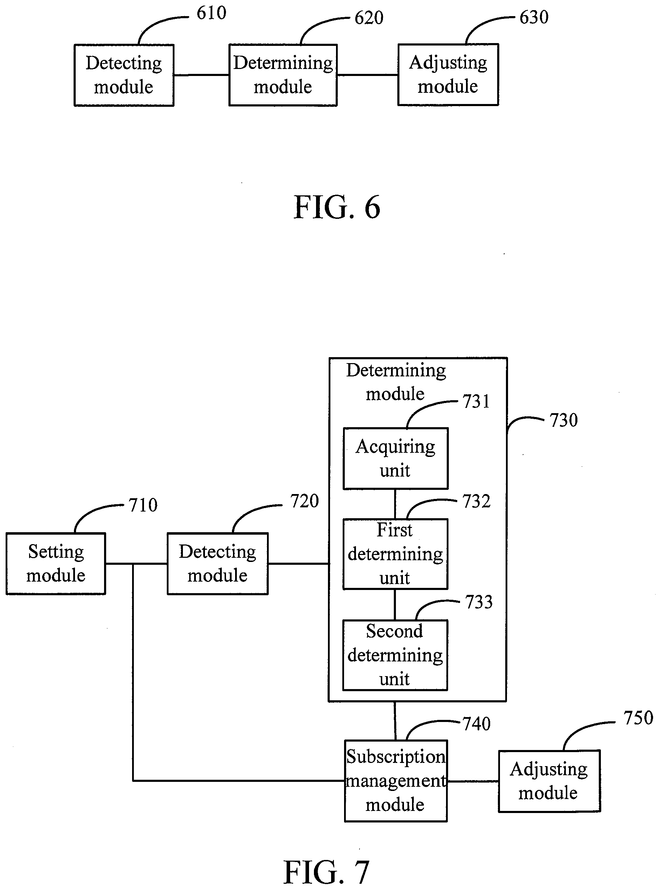

Please refer to FIG. 6, which illustrates a diagram of the structure of the mobile terminal according to an embodiment of the present invention. The mobile terminal in the embodiment includes the detecting module 610, the determining module 620, and the adjusting module 630.

The detecting module 610 is used for detecting a grip data through a sensor. For example, please refer to FIG. 2, which illustrates a diagram of the mobile terminal with a predetermined display style of the system according to an embodiment of the present invention.

When the user grips the mobile terminal with bigger screen size, and performs operations like browsing webpages or playing videos through the user end installed in the mobile terminal, the mobile terminal displays the buttons manipulated by the user according to the predetermined display style of the system displays the buttons manipulated by the user. For example, as shown in FIG. 2, when the mobile terminal is in vertical screen mode, the return button is displayed at the upper left corner of the content on the screen, for the user to manipulate; when the mobile terminal is in the horizontal screen mode, the volume adjustment button and the play/pause button are displayed directly below the content of the screen, for the user to manipulate, this is only an example, the predetermined display style of the system is not limited thereto.

The detecting module 610 detects a grip data of the region contacted with the user through a sensor. The sensor can be a pressure sensor, or a heat sensor, or a combination of a pressure sensor and a heat sensor, but is not limited to this, the sensor can be other sensors. The sensor is disposed on the borders around the mobile terminal, the number of sensors on each border can be one or more than one, and is not limited, when the number of sensors is one, the sensor covers the border of the mobile terminal, when the number of sensors is more than one, the sensors are sequentially disposed on and covering the borders of the mobile terminal.

It can be seen that, the sensor can be disposed to detect the grip data immediately, or disposed to detect the grip data at a predetermined time interval. The predetermined time interval can be disposed according to specific requirements. The grip data can be a single grip data, or an average value of the grip data within a certain time.

The detecting module 610 sends the detected grip data to the determining module 620.

The determining module 620 is used for determining a grip posture according to the grip data, wherein the grip posture includes a left-hand grip or a right-hand grip. For example, the determining module 620 receives the grip data, and according to the grip data determines the grip posture, wherein the grip posture includes a left-hand grip or a right-hand grip.

For example, the determining module 620 compares the grip data detected with the pre-stored grip data, to determine the current grip posture of the user. The grip posture includes a left-hand grip, a right-hand grip, or a both-hands grip.

Please refer to FIG. 3 to FIG. 4. FIG. 3 illustrates a diagram of adjusting the display style according to an embodiment of the present invention, wherein FIG. 3A illustrates a diagram of the grip data detected according to an embodiment of the present invention. FIG. 3B illustrates a diagram of determining the grip posture according to the grip data detected then adjusting the display style according to an embodiment of the present invention. FIG. 4A illustrates a diagram of the grip data detected according to another embodiment of the present invention. FIG. 4B illustrates a diagram of determining the grip posture according to the grip data detected then adjusting the display style according to another embodiment of the present invention.

For example, when the determining module 620 compares the grip data detected by the detecting module 610 with the pre-stored grip data, if the grip data detected by the detecting module 610 is the grip data shown as the part of the dark shadow in FIG. 3A or FIG. 4A (but not limited thereto), the determining module 620 determines the current grip posture of the user to be a right-hand grip. Wherein the grip data detected by the detecting module 610 can equal to the pre-stored grip data, the values can be proportional. Surely, a threshold of inaccuracy can also be set, when the difference between the detected grip data and the pre-stored grip data does not exceed the threshold of inaccuracy, the mobile terminal determines that the detected grip data equals to the pre-stored grip data, and otherwise determines that the detected grip data does not equal to the pre-stored grip data.

The grip data can be an original data or a characteristic data after processed. As shown in FIG. 3B, when the right hand is used to grip, the fingers of the right-hand contact the left side of the mobile terminal, generally, the number of the fingers is 2, 3, or 4. As to contact region (contour), the contour between the fingers may be discrete; with regard to the pressure, the pressure of the fingers sensed by the sensor is also discrete. The hollow of palm or the region of the right hand contacts the right side of the mobile terminal, the contacted region generally is a sequentially big area. Based on the situation mentioned above, the grip data of the right-hand grip can be ascertained; similarly, the grip data of the left-hand grip can also be ascertained.

Furthermore, as to FIG. 4B, when the right hand is used to grip, the fingers of the right-hand contact the right sides of the upper, bottom border of the mobile terminal, the hollow of palm or the region of the right hand contacts the right side of the mobile terminal. Generally the fingers can contact the right sides of both the upper border and the bottom border, also can only contact the right side of the upper border, or the right side of the bottom border, the contact region (contour) of the right side of the upper border or the right side of the bottom border may be discrete, but also may be a sequentially big area, and the contact region (contour) of the right side of the mobile terminal contacted by the hollow of palm or the region of the right hand contact generally is a sequentially big area. Based on the situation mentioned above, the grip data of the right-hand grip can be ascertained; similarly, the grip data of the left-hand grip can also be ascertained. It can be seen that the method of the determining module 620 determining a left-hand grip or a both-hands grip is similar, there is no further description here.

The determining module 620 sends the determined result to the adjusting module 630.

The adjusting module 630 is used for adjusting a display of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip. For example, the adjusting module 630 receives the determined result, when the determined result is that the grip posture is a left-hand grip or a right-hand grip, the current display style is adjusted to the display style corresponding to the grip posture. If the grip posture is a left-hand grip, the display of the mobile terminal is adjusted to the style convenient for the left-hand grip manipulation, that is, the manipulation function menu of the main screen or all screen is moved to the screen region which can be contacted by the left-hand thumb to be displayed for the left-hand thumb manipulation; if the grip posture is a right-hand grip, the display of the mobile terminal is adjusted to the style convenient for the right-hand grip manipulation, that is, the manipulation function menu of the main screen or all screen is moved to the screen region which can be contacted by the right-hand thumb to be displayed for the right-hand thumb manipulation.

For example, when the mobile terminal determines the current grip posture to be a left-hand grip or a right-hand grip, the current display style is adjusted to the display style corresponding to the grip posture of the current user, to make the adjusted display style convenient for the manipulation of the current grip posture. When the mobile terminal determines the current grip posture to be a left-hand grip, the display of the mobile terminal is adjusted to the style convenient for the left-hand grip manipulation; when the mobile terminal determines the current grip posture to be a right-hand grip, the display of the mobile terminal is adjusted to the style convenient for the right-hand grip manipulation.

When the mobile terminal determines the current grip posture to be a both-hands grip, the display style is not adjusted, and the current predetermined display style of the system is maintained.

The left-hand grip corresponds to the display style convenient for the left-hand manipulation, the right-hand grip corresponds to the display style convenient for the right-hand manipulation, and the both-hands grip corresponds to predetermined display style of the system. Surely the predetermined display style of the system includes the display styles corresponding to the horizontal screen and the vertical screen.

For example, as shown in FIG. 3B, when the mobile terminal is in the vertical screen mode, if the determined result received by the adjusting module 630 from the determining module 620 is that the current grip posture is a right-hand grip, then the return button is displayed at the right side of the content of the screen, for the convenience of the right-hand manipulation of the user. Surely, the position of the return button is not limited to this, and just needs to be adjusted to be within the range of the right-hand manipulation of the user.

When the mobile terminal is in the horizontal screen mode, if the determined result received by the adjusting module 630 from the determining module 620 is that the current grip posture is a right-hand grip, then the volume adjustment button, and the play/pause button are displayed at the right side of the content of the screen, for the convenience of the right-hand manipulation of the user. Surely, the positions of the volume adjustment button, and the play/pause button are not limited to this, and just need to be adjusted to be within the range of the right-hand manipulation of the user.

It can be seen that the method of the adjusting module 630 adjusting the display style according to the left-hand grip is similar, there is no further description here.

It can be seen that when the determined result received by the adjusting module 630 from the determining module 620 is that the current grip posture is changed, the adjusting module 630 adjusts the current display style to the style convenient for the changed grip posture manipulation. For example, when the determined result received by the adjusting module 630 from the determining module 620 is that the grip posture of the user is changed from a left-hand grip to a both-hands grip, the adjusting module 630 adjusts the current display style to the predetermined display style of the system; when the determined result received by the adjusting module 630 from the determining module 620 is that the grip posture of the user is changed from a left-hand grip to a right-hand grip, the adjusting module 630 adjusts the current display style to the style convenient for a right-hand grip manipulation.

In the aforementioned scheme, the mobile terminal immediately detects the grip data of the user through the sensor, and determines the current grip posture of the user according to the grip data, when the mobile terminal determines the current grip posture to be a left-hand grip or a right-hand grip, the display of the mobile terminal is adjusted to the style corresponding to the grip posture, for the convenience of the current grip posture manipulation of the user. The present invention can realize adjusting the display style to the style convenient for the current grip posture manipulation according to the mobile terminal with a large screen size currently gripped by the user, thereby improving the user's experience.

Please refer to FIG. 6, which illustrates a diagram of the structure of the mobile terminal according to an embodiment of the present invention, the mobile terminal in the embodiment is a mobile terminal with a larger screen size. The mobile terminal in the embodiment includes the setting module 710, the detecting module 720, the determining module 730, the subscription management module 740, and the adjusting module 750. The determining module 730 includes the acquiring unit 731, the first determining unit 732, and the second determining unit 733.

The setting module 710 is used for saving a setting message inputted by the user, when the setting module 710 receives the setting message of enabling a page auto-adjusting function inputted from the user, the setting module 710 notifies the subscription management module 740 of monitoring an event subscription device, and notifies the detecting module 720 of detecting the grip data, wherein the subscription device is used for subscribing the monitored event of a grip state, when the subscription management module 740 monitors in that the determining module 730 determines the grip posture to be the left-hand grip or the right-hand grip, the subscription management module 740 sends a notification message to the adjusting module 750, to control the adjusting module 750 to adjust the display of a subscriber to a style corresponding to the grip posture, the subscriber is a user end of the mobile terminal.

For example, the setting module 710 saves a setting message inputted by the user, when the setting module 710 receives the setting message of enabling a page auto-adjusting function inputted from the user, the setting module 710 notifies the subscription management module 740 of monitoring an event subscription device, and notifies the detecting module 720 of detecting the grip data through the sensor.

For example, when the user grips a mobile terminal with a larger screen size, or performs operations like browsing webpages or playing videos through the user end installed on the mobile terminal, the setting module 710 detects whether the command of enabling the page auto-adjusting function sent by the user is received, thus determining whether the user has enabled the page auto-adjusting function.

When the setting module 710 determines that the user has not enabled the page auto-adjusting function, the buttons manipulated by the user are displayed according to the predetermined display style of the system. For example, when the mobile terminal is in the vertical screen mode, the return button is displayed at the upper left corner of the content on the screen, for the user to manipulate; when the mobile terminal is in the horizontal screen mode, the volume adjustment button, and the play/pause button is displayed directly below the content of the screen, for the user to manipulate, this is only an example, the predetermined display style of the system is not limited thereto.

When setting module 710 determines that the user has enabled the page auto-adjusting function, it notifies the sensor of detecting the grip data of the mobile terminal gripped by the user.

The setting module 710 sends the notification message of detecting the grip data to the detecting module 720. The setting module 710 sends the notification message of monitoring an event subscription device to the subscription management module 740.

The detecting module 720 is used for receiving the notification message of detecting the grip data sent from the setting module 710, and detecting the grip data through the sensor. For example, after the detecting module 610 receives the notification message of detecting the grip data, the detecting module 610 detects the grip data of the region contacted with the user through the sensor. The sensor can be a pressure sensor, or a heat sensor, or a combination of a pressure sensor and a heat sensor, but is not limited thereto, the sensor can be other sensors. The sensors are sequentially disposed on the housing edge of the mobile terminal, that is, the sensors are disposed around the housing edge.

When the sensor is a pressure sensor, the sensor gathers pressure values of itself, the grip here is the pressure value. When the sensor is a heat sensor, the sensor gathers heat values of itself, the grip here is the heat value.

It can be seen that, the sensor can be set to immediately detect the grip data, or can be set to detect the grip data at each predetermined time interval. The predetermined time can be set with regards to specific requirements. The grip data can be a single grip data, or an average value of the grip data within a certain time.

The detecting module 720 sends the grip data detected to the acquiring unit 731.

The acquiring unit 731 is used for acquiring a contour formed by the region of the grip data sensed by the sensor. For example, the acquiring unit 731 compares the grip data sensed by the sensor with the pre-stored grip data, thereby determining whether the current sensed grip data is valid data. When the acquiring unit 731 determines the detected grip data to be valid data, it acquires the contour formed by the region of the valid grip data sensed by the sensor.

The method of the acquiring unit 731 determining whether the current grip data sensed is valid data can be comparing the sensed grip data with the value of the predetermined interval, if the sensed grip data is within the range of the value of predetermined interval, then determining the grip data to be valid, if the sensed grip data is not within the range of the value of predetermined interval, then determining the grip data to be invalid. The value of predetermined interval can be set according to practical requirements.

For example, when the sensor is a pressure sensor, the grip data is the value of the pressure. The mobile terminal compares the value of the pressure currently sensed by the sensor with the maximum value and minimum value of the predetermined interval, thereby determining whether the current grip data belongs to the predetermined interval. If the sensed value of the pressure is within the range of the value of predetermined interval, then it is determined to be valid grip data. If the sensed grip data is not within the range of the value of predetermined interval, then it is determined to be invalid grip data.

When the sensor is a heat sensor, the grip data is the heat value. The acquiring unit 731 compares the value of the heat currently sensed by the sensor with the maximum value and minimum value of the predetermined interval, thereby determining whether the current grip data belongs to the predetermined interval. If the sensed value of heat is within the range of the value of predetermined interval, then it is determined to be valid grip data, if the sensed grip data is not within the range of the value of predetermined interval, then it is determined to be invalid grip data.

It can be seen that the method of the acquiring unit 731 determining whether the current grip data is valid grip data is not limited to this. In method of other embodiments, it can be determined through other methods, for example, comparing the current grip data with the original grip data, or determining through the predetermined interval to which the determined difference of the current grip data and the pre-stored original grip data belongs.

When the acquiring unit 731 determines the current grip data to be valid grip data, the contour formed by the region of the valid grip data sensed by the sensor is acquired.

Please refer to FIG. 3 to FIG. 4. FIG. 3 illustrates a diagram of adjusting the display style according to an embodiment of the present invention, wherein FIG. 3A illustrates a diagram of the grip data detected according to an embodiment of the present invention. FIG. 3B illustrates a diagram of determining the grip posture according to the grip data detected then adjusting the display style according to an embodiment of the present invention. FIG. 4A illustrates a diagram of the grip data detected according to another embodiment of the present invention. FIG. 4B illustrates a diagram of determining the grip posture according to the grip data detected then adjusting the display style according to another embodiment of the present invention.

For example, when the acquiring unit 731 determines current grip data to be valid grip data, the contour formed by the region of the valid grip data sensed by the sensor is acquired, as the grip data shown as the dark shadow part in FIG. 3A or FIG. 4A (but not limited thereto).

The acquiring unit 731 sends the acquired contour to the first determining unit 732.

The first determining unit 732 is used for receiving the acquired contour, comparing the contour with the contour of the predefined grip posture and determining whether the current grip posture is a single-hand grip or a both-hands grip. For example, the first determining unit 732 compares the contour formed by the region of the valid grip data sensed by the sensor with the contour of the predefined grip posture, and determines whether the current grip posture is a single-hand grip or a both-hands grip. The contour of the predetermined grip posture is established in advance and stored in the mobile terminal. The contour of the predetermined grip posture includes the single-hand grip, a both-hands grip in the vertical screen mode, the single-hand grip, and a both-hands grip in the horizontal screen mode; the single-hand grip in the vertical screen mode and the horizontal screen mode further include a left-hand grip and a right-hand grip.

When the contour received by the first determining unit 732 from the acquiring unit 721 is the contour shown by the dark shadow part in FIG. 3A or FIG. 4A (but not limited thereto), the first determining unit 732 determines the current grip posture of the user to be a single-hand grip. The size of the contour acquired by the acquiring unit 721 can be equal to the size of the contour of the predetermined, pre-stored grip posture, the sizes can also be proportional. Surely, a threshold value of inaccuracy can also be set, when the difference of the acquired contour and the pre-stored contour of the predefined grip posture does not exceed the threshold value, then the sizes are considered the same, but otherwise are not the same.

It can be seen that the method of the first determining unit 732 determining a left-hand grip or a both-hands grip is similar, there is no further description here.

Surely, it is not necessary to determine the grip posture through the contour formed by the region of the determined grip data, for example, the grip posture can be determined through the characteristic of the determined grip data, or the grip posture can be determined by means of the pressure on the two sides of the mobile terminal, i.e. the distribution of the pressure.

The first determining unit 732 sends the determined result to the second determining unit 733.

The second determining unit 733 is used for receiving the determined result from the first determining unit 732. When the determined result is that the grip posture is a single-hand grip, the grip posture is determined to be a left-hand grip or a right-hand grip. For example, when the determined result received by the second determining unit 733 from the first determining unit 732 is that the current grip posture of the user is a single-hand grip, then the second determining unit 733 compares the acquired contour with the contour of the predefined left-hand grip posture or a right-hand grip posture, thereby determining whether the current grip posture is a left-hand grip or a right-hand grip.

For example, when the determined result received by the second determining unit 733 from the first determining unit 732 is that the contour shown by the dark shadow part in FIG. 3A or FIG. 4A(but not limited thereto) is a single-hand grip, the second determining unit 733 then compares the contour shown by the dark shadow part in FIG. 3A or FIG. 4A with the contour of the predefined left-hand grip posture or a right-hand grip posture, to determine the current grip posture of the user to be a right-hand grip. The size of the acquired contour can be equal to the size of the contour of the predefined, pre-stored grip posture, the sizes can also be proportional.

It can be seen that the method of the second determining unit 733 determining left-hand grip is similar, there is no further description here.

Alternatively, after the second determining unit 733 determines whether the grip posture is a left-hand grip or a right-hand grip, which also determines whether the user is using a single-hand manipulation. The single left-hand manipulation indicates that the user grips mobile terminal with the left hand, and uses the left hand to manipulate the mobile terminal; the single right-hand manipulation indicates that the user grips mobile terminal with the right hand, and uses the right hand to manipulate the mobile terminal. For example, after the second determining unit 733 determines whether the grip posture is a left-hand grip or a right-hand grip, it also determines whether the user is using a single left-hand or a single right-hand manipulation.

There are many methods of the second determining unit 733 determining whether is using a single-hand manipulation. For example, the second determining unit 733 computes the statics of the distribution of the manipulated region on screen during a period of time, if the manipulated region on screen is fixed with the range if the activity of the left-hand thumb during the period of time, then the mobile terminal is considered to be manipulated with a single left-hand; similarly, if the manipulated region on screen is fixed with the range if the activity of the right-hand thumb during the period of time, then the mobile terminal is considered to be manipulated with a single right-hand.

The method of the second determining unit 733 determining whether single-hand manipulation is being used can determine through the characteristic of the frequently moving thumb in single-hand manipulation. For example, the pressure on the side of the mobile terminal contacted with the thumb changes with the activity of the thumb; however, correspondingly, the pressure on the other side of the mobile terminal contacted with the forefinger or middle finger basically does not change, or changes a little. When the second determining unit 733 determines that the data detected by the detecting module 720 through the sensor matches the situation mentioned above, it is determined to be single-hand manipulation.

The subscription management module 740 is used for receiving the notification message of monitoring the event subscription device from the setting module 710, and monitoring the grip state of the event subscription device. The subscription device is used for subscribing the monitored event of a grip state, the grip state includes a left-hand grip or a right-hand grip.

The subscription management module 740 is also used for monitoring the determining module 730 determining whether the grip posture is a left-hand grip or a right-hand grip, when the subscription management module 740 monitors in that the determining module 730 determines the grip posture to be a left-hand grip or a right-hand grip, and sends the notification message of adjusting the display to the adjusting module 750.

Alternatively, the subscription management module 740 may also be used for monitoring the determining module 730 to determine whether the grip posture is single left-hand manipulation or single right-hand manipulation, when the subscription management module 740 monitors in that the determining module 730 determines the grip posture to be single left-hand manipulation or single right-hand manipulation, sends the notification message of adjusting the display to the adjusting module 750.

The adjusting module 750 is used for receiving the notification message of adjusting the display from the subscription management module 740, and adjusting the operation menu of the subscriber to the region convenient for thumb manipulation under the grip posture.

The number of subscribers can be one, or more than one, and the subscriber can be already enabled by the user or be used by the user, or can be not yet enabled by the user.

If the grip posture is a left-hand grip, then the operation menu currently used by the user at the user end is adjusted to the region convenient for left-hand thumb manipulation. If the grip posture is a right-hand grip, then the operation menu of the mobile terminal is adjusted to the region convenient for right-hand thumb manipulation.

The single left-hand manipulation indicates that the user grips mobile terminal with the left hand, and uses the left hand to manipulate the mobile terminal; the single right-hand manipulation indicates that the user grips mobile terminal with the right hand, and uses the right hand to manipulate the mobile terminal.

For example, as shown in FIG. 3B, when the mobile terminal is in the vertical screen mode, if the subscription management module 740 monitors in that the determining module 730 determines the current grip posture to be a right-hand grip, then the adjusting module 750 controls the subscriber to display the return button at the right side of the content of the screen, for the convenience of the right-hand manipulation of the user. Surely, the position of the return button is not limited thereto, and just needs to be adjusted to be within the range of the right-hand manipulation of the user.

It can be seen that if the subscription management module 740 monitors in that the determining module 730 determines the current grip posture of the user to be a right-hand single-hand manipulation, then the method of adjusting the display is the same.

When the mobile terminal is in the horizontal screen mode, if the subscription management module 740 monitors in that the determining module 730 determines the current grip posture to be a right-hand grip, then the adjusting module 750 displays the volume adjustment button and the play/pause button at the right side of the content of the screen, for the convenience of the right-hand manipulation of the user. Surely, the positions of the volume adjustment button and the play/pause button are not limited to this, and just need to be adjusted to be within the range of the right-hand manipulation of the user.

If the subscription management module 740 monitors in that the determining module 730 determines the current grip posture to be a left-hand grip, the method of the adjusting module 750 adjusting the display is the same, there is no further description here.

It can be seen that if the subscription management module 740 monitors in that the determining module 730 determines the current grip posture of the user to be a single right-hand manipulation, the method of adjusting the display is the same, there is no further description here.

In the aforementioned scheme, the mobile terminal determines the current grip posture of the user to be a left-hand grip or a right-hand grip through the grip data detected immediately by the sensor, and adjusts the display of the mobile terminal to the corresponding style of the grip posture, for convenience of the manipulation under the current grip posture of the user. The present invention can realize adjusting the display style to the style convenient for the current grip posture manipulation according to the mobile terminal with a large screen size currently gripped by the user, thereby improving the user's experience.

In summary, although the present invention has been described in preferred embodiments described above, the preferred embodiments described above are not intended to limit the invention. One of ordinary skill in the art without departing from the spirit and scope of the invention otherwise, may be used for a variety modifications and variations, so the scope of the invention as defined by the claims shall prevail.

## Claims

1. A displaying method, comprising:
detecting a grip data through a sensor by a mobile terminal;
acquiring a contour formed by a region of the grip data sensed by the sensor;
comparing the contour with a predefined grip posture, and determining whether a current grip posture is a single-hand grip or a both-hands grip;
determining that the grip posture is a left-hand grip or a right-hand grip if the grip posture is the single-hand grip, otherwise, no processing;
locating an operation menu of the mobile terminal into a region convenient for a thumb manipulation under the grip posture, wherein the operation menu of the mobile terminal is located into a region convenient for a left-thumb manipulation if the grip posture is the left-hand grip;, while the operation menu of the mobile terminal is located into a region convenient for a right-thumb manipulation if the grip posture is the right-hand grip.

2. The displaying method of claim 1, wherein the sensors are sequentially disposed on an edge of a housing of the mobile terminal, the sensor is a pressure sensor or a heat sensor.

3. The displaying method of claim 1, wherein before the step of detecting the grip data through the sensor by the mobile terminal, the method further comprises:
determining whether to enable a page auto-adjusting function;
monitoring an event subscription device and performing the step of detecting the grip data through the sensor by the mobile terminal if the auto-adjusting function is enabled, wherein the subscription device is used for subscribing a monitored event of a grip state, when it is monitored that the grip posture is the left-hand grip or the right-hand grip, sending a notification message to a subscriber, to control the subscriber to adjust a display of the subscriber to a style corresponding to the grip posture, the subscriber is a user end of the mobile terminal.

4. A displaying method, comprising:
detecting a grip data through a sensor by a mobile terminal;
determining a grip posture according to the grip data, wherein the grip posture includes a left-hand grip or a right-hand grip;
adjusting displaying of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip.

5. The displaying method of claim 4, wherein the step of determining the grip posture according to the grip data, the method particularly comprises:
acquiring a contour formed by a region of the grip data sensed by the sensor;
comparing the contour with a predefined grip posture, and determining whether a current grip posture is a single-hand grip or a both-hands grip;
determining that the grip posture is a left-hand grip or a right-hand grip if the grip posture is the single-hand grip, otherwise, no processing.

6. The displaying method of claim 4, wherein the step of adjusting the display of the mobile terminal to the corresponding style of the grip posture, the method particularly comprises:
locating an operation menu of the mobile terminal to a region convenient for a thumb manipulation under the grip posture, wherein, if the grip posture is the left-hand grip, then locating the operation menu of the mobile terminal to a region convenient for a left-thumb manipulation; if the grip posture is the right-hand grip, then locating the operation menu of the mobile terminal to a region convenient for a right-thumb manipulation.

7. The displaying method of claim 4, wherein the sensors are sequentially disposed on an edge of a housing of the mobile terminal, the sensor is a pressure sensor or a heat sensor.

8. The displaying method of claim 4, wherein before the step of detecting the grip data through the sensor by the mobile terminal, the method further comprises:
determining whether to enable a page auto-adjusting function;
if the auto-adjusting function enabled, then monitoring an event subscription device and performing steps of detecting the grip data through the sensor by the mobile terminal, wherein the subscription device is used for subscribing the monitored event of a grip state, when it is monitored that the grip posture is the left-hand grip or the right-hand grip, sending a notification message to a subscriber, to control the subscriber to adjust a display of the subscriber to a style corresponding to the grip posture, the subscriber is a user end of the mobile terminal.

9. A mobile terminal, comprising:
a detecting module for detecting a grip data through a sensor;
a determining module for determining a grip posture according to the grip data, wherein the grip posture including a left-hand grip or a right-hand grip;
an adjusting module for adjusting a display of the mobile terminal to a style corresponding to the grip posture, wherein if the grip posture is the left-hand grip, then the display of the mobile terminal is adjusted to a style convenient for a manipulation of the left-hand grip; if the grip posture is the right-hand grip, then the display of the mobile terminal is adjusted to a style convenient for a manipulation of the right-hand grip.

10. The mobile terminal of claim 9, wherein the determining module comprises:
an acquiring unit for acquiring a contour formed by a region of the grip data sensed by the sensor;
a first determining unit for comparing the contour with a predefined grip posture, and determining whether a current grip posture is a single-hand grip or a both-hands grip;
a second determining unit for determining whether the grip posture is a left-hand grip or a right-hand grip, when the grip posture is determined to be the single-hand grip by the first determining unit.

11. The mobile terminal of claim 9, wherein the adjusting module is particularly used for locating an operation menu of the mobile terminal to a region convenient for a thumb manipulation under the grip posture, wherein, if the grip posture is the left-hand grip, then locating the operation menu of the mobile terminal to a region convenient for a left-thumb manipulation; if the grip posture is the right-hand grip, then locating the operation menu of the mobile terminal to a region convenient for a right-thumb manipulation.

12. The mobile terminal of claim 9, wherein the sensors are sequentially disposed on an edge of a housing of the mobile terminal, the sensor is a pressure sensor or a heat sensor.

13. The mobile terminal of claim 9, wherein the terminal further comprises:
a subscription management module;
a setting module for saving a setting message inputted by the user, when the setting module receives the setting message of enabling a page auto-adjusting function inputted from the user, notifying the subscription management module of monitoring an event subscription device, and notifying the detecting module of detecting the grip data, wherein the subscription device is used for subscribing the monitored event of a grip state, when it is monitored that the grip posture is the left-hand grip or the right-hand grip, sending a notification message to a subscriber, to control the subscriber to adjust a display of the subscriber to a style corresponding to the grip posture, the subscriber is a user end of the mobile terminal.
